# EUROPEAN PATENT APPLICATION

(11) **EP 4 385 642 A1**
(43) Date of publication of application: **19.06.2024**
(21) Application number: 23020538.7
(22) Date of filing: 04.12.2023
(51) Int. Cl.: B22F 3/11, B22F 3/26, B22F 7/00, B22F 7/08, B22F 10/62, B33Y 40/20, B33Y 80/00, C22C 29/12, C22C 32/00, B22F 7/04, B22F 7/06

(54) **COMPOSITE MATERIAL**

(30) Priority: 16.12.2022 CZ 20225290
(71) Applicant: Fyzikální ústav AV CR, v. v. i., 18200 Praha 8 (CZ)
(72) Inventor: Schovánek, Petr, 75131 Lipník nad Becvou (CZ); Dejneka, Alexandr, 25001 Brandýs nad Labem Stará Boleslav (CZ); Hrabovsky, Miroslav, 78301 Olomouc, Slavonin (CZ); Gruber, Pavel, 19012 Praha 9, Dolni Pocernice (CZ); Jetmar, Tomás, 15200 Praha 5, Hlubocepy (CZ); Michal, Stanislav, 75002 Prerov, Prerov I-Mesto (CZ); Palatka, Miroslav, 78301 Olomouc, Nemilany (CZ); Pech, Miroslav, 78353 Velka Bystrice (CZ)
(74) Representative: Soukup, Petr

(57) **Abstract**

A composite material comprising a metal component (1) and a matrix (2), wherein the metal component (1) is a spatial structure obtained by additive manufacturing, and the matrix (2) is made of glass or silicates or aluminosilicates, wherein the metal component (1) is joined with the matrix (2) by sealing.

## Description

### Technical Field

The invention falls within the field of additive technology products and joining of metals with other inorganic materials and relates to a composite material.

### Background Art

Additive manufacturing, also known as 3D printing, is a process of creating three-dimensional objects on the basis of digital data. Unlike machining, which removes material, the additive process adds material gradually. The final object is created of thin layers placed on top each other. This technology enables the fabrication of complex shapes that cannot be manufactured using conventional engineering technologies such as casting, forming, and cutting. Additive manufacturing has therefore come to the forefront of research and development worldwide in recent years. The applications of additive manufacturing are almost limitless, ranging from aerospace, automotive, construction, healthcare to fashion. 3D printing has become very popular in small-batch production because production can start virtually overnight at minimum input costs. Quick 3D prints of prototypes are used as preproduction visualisation models. With its low costs, it is also becoming increasingly useful for hobbyists and individuals who wish to make their own item fast and at a low price. A special and unique position is being achieved in this sector by the technology of additive manufacturing, i.e. 3D printing, of metallic materials, which enables a direct production of complex parts for end-use applications. The basic additive manufacturing technology is described, for example, at hftps://ntopology.com/blog/designing-high-performance-filters-for-additive-manufacturing/, https://industrytoday.com/additive-manufacturing/ or in US5204055, US5786562, US6046426, US4938816, US9767224. The latest trends in the current development of additive manufacturing and technology optimisation and applications are summarised, for example, in the papers Plocher, J., Panesar, A., Materials and Design, 183 (2019), 108164; Lin Cheng, Pu Zhang, Emre Biyikli and Jiaxi Bai , Rapid Prototyping Journal, 23/4 (2017), 660-677; Wei Gao, Yunbo Zhang, Devarajan Ramanujan, Karthik Ramani, Yong Chen, Christopher B. Williams, Charlie C.L. Wang, Yung C. Shin, Song Zhang, Pablo D. Zavattieri, Computer-Aided Design, 69 (2015), 65-89; Ahmed Hussein, Liang Hao, Chunze Yan, Richard Everson, Philippe Young, Journal of Materials Processing Technology, 213 (2013), 1019- 1026; Li Yuan, Songlin Ding, Cuie Wen, Bioactive Materials, 4 (2019), 56-70; https://www.metal-am.com/articles/modelling-the-mechanical-behaviour-of-3d-printed-cellular-structures/; Abdul Hadi Azman, Method for integration of lattice structures in design for additive manufacturing, Materials, Universite Grenoble Alpes, 2017, https://tel.archives-ouvertes. fr/tel-01688758/document. US10384416 describes the additive printing of elastic materials from a digital master, which materials can be assembled into functional structures, and presents examples of structures from discrete units created by an automated process according to a lattice. The proposed structures exhibit advantageous mechanical properties compared to bulk material of the same chemical composition. US 10395372 discloses a system, methods, and materials for pre-processing and post-processing in additive manufacturing, where a computer implemented method for image processing of a computer-modelled object to be fabricated enables the input of object geometry data. The method enables the creation of sectional snapshots, boundary tracing, and acquiring dimensional measurements of the model. US 11010504 concerns a method for designing lattice structures for the additive manufacturing of engineering components and describes the systems for designing lattice structures, which are modelled as parameterised representative unit cells providing a virtual material characterisation for a lattice structure. Parameterised lattice models enable the design and simulations of true lattice material behaviour for part topology optimisation. The topology is also optimised with regard to the printability of cells of given densities. US 10557464 describes improvements in the strength parameters of compressor components while reducing the weight of the system. The improvements are achieved by applying lattice structures designed using repeating cells in the interior of the individual compressor components. Additive 3D printing of metallic components is thus applied in the manufacturing process. US 10635088 discloses a method for computer-aided design and manufacturer of hollow-topology components with lattices, namely, the design methods, systems, and apparatus, including computer programs, for computer-aided design of physical structures using generative design processes. As a result, hollow structures with a lattice arrangement are formed to implement additive 3D printing. US 10633976 the methods of manufacturing, customising, and repairing a rotor blade using additive manufacturing processes. A method of manufacturing the rotor blade skin and internal support structure using this technology is proposed, including dimensional customisations and repairs.

The joining of metals with glass using the sealing technology has been known for many years. When metal is sealed with glass, the metal and glass are joined by the chemical reaction of the oxide layer on the metallic surface with the glass, with the oxides becoming partially dissolved in the glass, thus forming a strong bond between the glass and the metal. This joining technique was first mainly used for handling gases and working with vacuum. The sealing methodology and examples are described, for example, in the publications by E. C. McKelvy and C. S. Taylor, J. Am. Chem. Soc. 1920, 42, 7, 1364-1374 and L. J. Buttolph, "Silica to Glass and to Metal Joints", J. Opt. Soc. Am. 11, 549-557 (1925). An overview and description of the individual glass-to-metal sealing technologies is provided by the monograph of A. Roth, Vacuum Sealing Techniques, Pergamon Press, 1966. Technical embodiments of permanent glass-to-metal seals are described in US1046084 and US1293441, for example. The pre-processing of the metallic allows to achieve the expansion coefficient enabling the formation of high-quality seals with borosilicate and lead glass is described in US2062335. It is also indicated for use especially in vacuum-based equipment and for sealing electric conductors in glass. The method for cooling the sealing joints to prevent cracking is described and several modifications of the component surfaces before actual sealing are disclosed. US2392314 discloses improved embodiments of vacuum-tight glass-to-metal joints, especially for borosilicate glass with molybdenum, nickel, cobalt and iron alloys, wherein the improvement concerns higher chemical resistance of the glass in the seals, increased electrical resistance of the glass at higher temperatures during the operation of seal grommets. US3355332 describes the sealing of electrical conductors in glass. The approach differs for hard and soft glass, with the difference being the thermal expansion coefficient. In general, tungsten, molybdenum, and iron and nickel alloys for hard glass are used for seals operated at ambient temperature. For soft glass, seals with platinum, iron and nickel alloys, and high-expansion chromium alloys are used for soft glass. Electric conductors in the grommets have a reduced cobalt content to decrease the thermal expansion coefficient. The solution also optimises stress in the seals by influencing the content of lead, silicon, or aluminium. The patent also discloses influencing the strength characteristics by adjusting the content of oxides at the seal site and by optimising the chemical composition.

Currently, there is no knowledge of a composite material consisting of two or more component to combine a metal product made by additive manufacturing with glass or certain silicates or aluminosilicates.

The objective of the present invention is to disclose a material that enables the construction of lightweight products of high strength and toughness while keeping the weight to a minimum and provides a polishable finish while maintaining light transmittance.

### Summary of the Invention

The stated objective is achieved by the invention, which is a composite material comprising a metal component and a matrix, wherein the metal component is a spatial structure obtained by additive manufacturing and the matrix is made of glass or silicates or aluminosilicates, with the metal component being joined with the matrix by sealing.

In a preferred embodiment, the metal component is a structure with a triply periodic minimal surface.

It is also preferred for the metal component to be created as a spatial structure of the lattice type.

In another preferred embodiment, the metal component is joined with the matrix only by a part of its volume.

Finally, the metal component is preferred to be completely enclosed in the matrix.

The present invention achieves a new and superior effect in that the composite material according to the invention combines the mechanical properties of the two components in such a way that the mechanical properties of stiffness, strength, and toughness are higher when compared to the materials being used separately, and its strength is higher than that of the stand-alone metal material of the same dimensions. Furthermore, this composite material can withstand higher mechanical loads without deformation than its individual components of the same weight, and it also exhibits lower deformation under the same load than a component of the same shape and dimensions formed from the separate components of the composite. At the same mechanical properties that a component made conventionally from bulk metal, the composite material according to this invention has a lower weight, thus resulting in significant material savings. The proposed composite material also enables the manufacture of very light mirrors of any size, minimising their weight while maintaining other parameters. It is also possible to vary the light transmittance of the composite material as well as its mechanical parameters. If the metal component of the composite material is fully enclosed in the matrix, the corrosion resistance of the component so created is significantly higher than that of the metal structure itself.

### Description of Drawings

Specific examples of the invention embodiments are shown in the accompanying drawings, where:
- Fig.1: is an overall axonometric view of the basic embodiment of the composite material
- Fig.2: is an axonometric view of the 3D-printed metal component of the composite material,
- Fig.3: is the separate composite material component made of glass, silicate, or aluminosilicate, which becomes the matrix after sealing,
- Fig.4: is an axonometric view of the composite material as an embodiment with a higher mutual ingress of the metal component and the matrix,
- Fig.5: is an axonometric view of the composite material in an embodiment where the metal phase is fully enclosed by the matrix,
- Fig.6: is an axonometric view of the composite material with an alternative embodiment of the metal component,
- Fig.7: (a) to (c) are examples of alternative structures of the metal component of the composite material.

The drawings illustrating the present invention and the following examples of a particular embodiment of the composite material do not in any way limit the scope of protection stipulated in the definition, but merely illustrate the principle of the invention.

### Detailed Description of the Invention

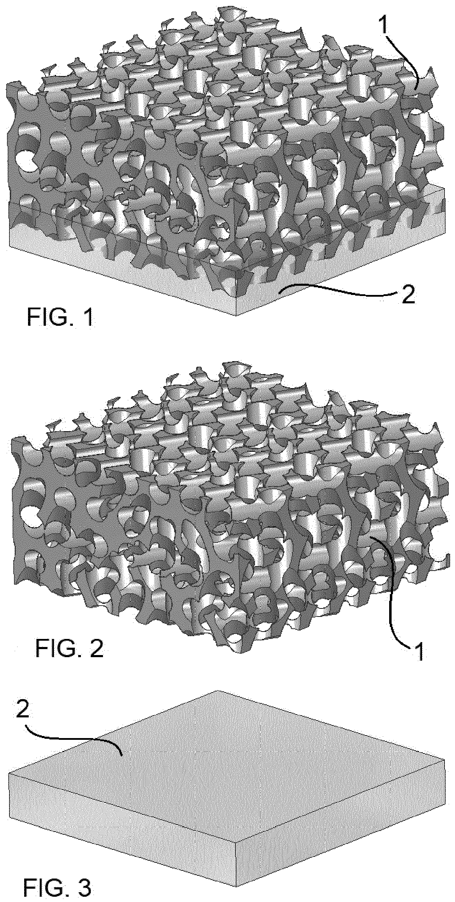

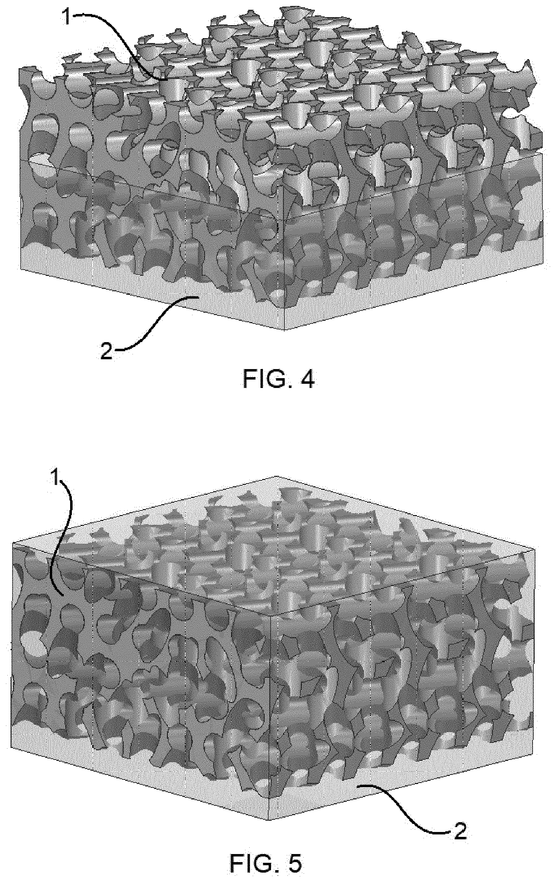

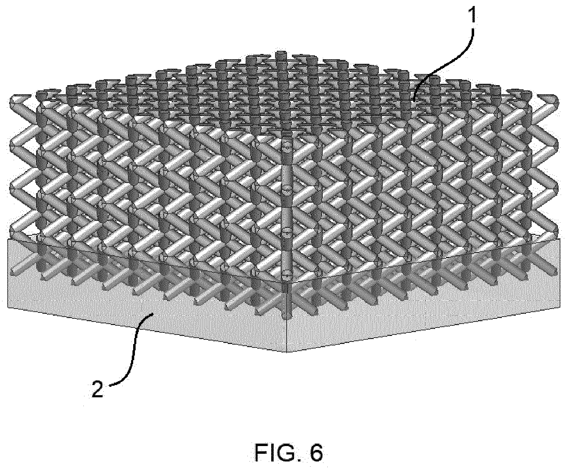

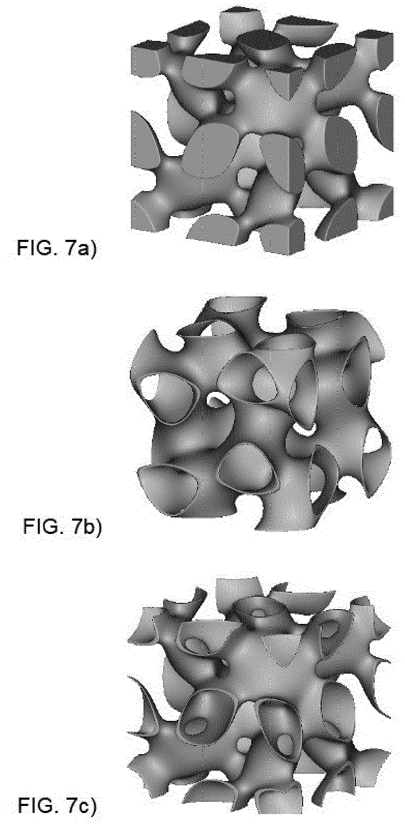

The composite material according to the present illustrations comprises two members, with these members being a metal component 1 and a matrix 2, respectively, where the metal component 1 is a spatial structure made by additive manufacturing, i.e. 3D printing, and the matrix 2 is made of glass or silicates or aluminosilicates, wherein the metal component 1 is joined with the glass matrix 2 by sealing over at least a part of its surface or a part of its volume. The metal component 1 is preferably made as a structure with a triply periodic minimal surface, as shown in Figs. 1 to 5, consisting of interconnected unit cells. Other examples of the shapes of the metal component 1 with triply periodic minimal surface are shown in Figures 7(a) to 7(c), given as an example only, and they may take any other shapes achievable by additive manufacturing, or 3D printing. The embodiment of the metal component 1 as a structure with triply periodic minimal surface is not the only solution; it is alternatively made as a lattice-type spatial structure, as shown in Figure 6. As shown in Figs 1 and 4, only a part of the metal component (2) is sealed in the matrix (2), with the sealed volume being of any magnitude, or the metal component (1) may be joined with the matrix (2) only on the surface edge area of the former. As an alternative, the full volume of the metal component (2) is sealed in the matrix (1), as shown in Fig. 5, with the metal component (1) being fully enclosed by the matrix (2), not protruding from the surface of the latter at any location, and being fully protected from external influences by the matrix (2). The material from which the matrix (2) is made, i.e. glass, silicates or aluminosilicates, are surface-treatable and polishable.

### Industrial Applicability

The present invention is applicable in many technological fields. One of such fields is the construction industry, where the composite material may be used for designing high-strength structural elements which may replace glass or armoured glass or similar materials in some applications. The material may also be used for space heating using the electrical resistance of the metal structure and its heating by the passing electric current. Another area of application the construction of optical mirror systems, where the minimised weight can be utilised while other parameters are maintained.

## Claims

1. A composite material comprising a metal component (1) and a matrix (2), wherein the metal component (1) is a spatial structure obtained by additive manufacturing, **characterized in that** the matrix (2) is made of glass or silicates or aluminosilicates, wherein the metal component (1) is joined with the matrix (2) by sealing.

2. A composite material according to Claim 1, **characterized in that** the metal component (1) is a structure with a triply periodic minimal surface.

3. A composite material according to Claim 1, **characterized in that** the metal component (1) is made as a lattice-type spatial structure.

4. A composite material according to any one of Claims 1 to 3, **characterized in that** the only a part of the volume of the metal component (1) is joined with the matrix (2).

5. A composite material according to any one of Claims 1 to 3, **characterized in that** the metal component (1) is fully enclosed by the matrix (2).
